# FASCICULE DE BREVET EUROPEEN

(11) **EP 4 226 128 B1**
(45) Date de publication et mention de la délivrance du brevet: **03.07.2024**
(21) Numéro de dépôt: 21777466.0
(22) Date de dépôt: 10.09.2021
(51) Int. Cl.: F25D 29/00, G01F 15/08, F25D 3/10, B23Q 11/10

(54) **PROCÉDÉ D'ALIMENTATION EN FLUIDE CRYOGÉNIQUE D'UN POSTE UTILISATEUR, NOTAMMENT D'UNE MACHINE D'USINAGE**
VERFAHREN ZUR VERSORGUNG EINER VERBRAUCHERSTATION MIT KRYOGENEM FLUID, INSBESONDERE EINER BEARBEITUNGSSTATION
METHOD FOR SUPPLYING CRYOGENIC FLUID TO A USER STATION, IN PARTICULAR A MACHINING STATION

(30) Priorité: 05.10.2020 FR 2010131
(43) Date de publication de la demande: 16.08.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: POIRIER, Alban, 92227 Bagneux (FR); CHARVE, Etienne, 92227 Bagneux (FR); BOUQUIN, Fabrice, 92227 Bagneux (FR)
(74) Mandataire: Air Liquide
(86) Numéro de dépôt international: PCT/EP2021/074971
(87) Numéro de publication internationale: WO 2022/073716

(56) Documents cités:
- WO-A1-2014/083251
- WO-A2-2004/005791
- FR-A1- 2 951 242
- FR-A1- 2 975 772
- FR-A1- 3 044 071
- US-A- 4 768 356

## Description

La présente invention concerne de façon générale les procédés utilisant un liquide cryogénique comme l'azote liquide, et pour lesquels le taux de diphasique liquide/gaz parvenant au poste utilisateur est un facteur important, i.e influençant la qualité de ce produit ou effectue ce poste, c'est le cas notamment du domaine du cryo-usinage de pièces mécaniques, c'est aussi le cas par exemple des mélangeurs cryogéniques en alimentaire, équipés de buses d'injection par la partie basse des mélangeurs.

Développons dans ce qui suit le cas de l'usinage.

L'usinage est un procédé de mise en forme de pièces par enlèvement de matière. L'énergie mécanique nécessaire à l'usinage, et donc la formation de copeaux, est quasiment intégralement transformée en chaleur. Malgré les bonnes conductivités thermiques de certains matériaux usinés et usinant, l'emploi d'un fluide de coupe demeure obligatoire pour garantir:
- Le refroidissement et la lubrification de la zone de coupe ;
- Mais aussi l'évacuation des copeaux en dehors de l'espace de travail.

Ces fluides de coupe sont majoritairement des huiles entières ou solubles à base minérale ou synthétique. Les températures rencontrées au coeur de la zone de coupe (couramment +800 °C à +1 000 °C) conduisent, d'une part, à la production de fumées ou gaz nocifs pour l'environnement extérieur, et d'autre part, à une pollution chimique des copeaux et surfaces usinées allant jusqu'à l'altération de leurs propriétés.

Les huiles sont un poste important de dépenses à travers leurs coûts d'achat et de recyclage mais aussi leur gestion. Dans ce cadre, les méthodes de lubrification dites de « micro-lubrification » ou « à sec » réduisent, voire suppriment, la consommation des fluides de coupe. Les performances d'usinage s'en trouvent dégradées, c'est pourquoi ces méthodes ne sont appliquées que dans les cas d'usinage qui ne requièrent qu'un faible refroidissement de la zone de coupe (tels que usinage de matériaux à base aluminium, usinage grande vitesse, etc...).

Dans les autres cas d'usinage, ceux qui requièrent un fort refroidissement de la zone de coupe, l'usinage par apport de fluide cryogénique, qu'on appellera dans ce qui suit «usinage cryogénique», se présentent comme une solution de refroidissement et de lubrification de la zone de coupe très attractive, alliant les avantages des huiles (évacuation des copeaux, fluide caloporteur, etc.) et ceux de l'usinage à sec (respect de l'environnement, non pollution des surfaces générées, recyclage des copeaux, augmentation de la durée de vie des outils etc.).

Ce fluide cryogénique peut être de l'azote et du CO₂.

On dispose d'un art antérieur très volumineux concernant l'alimentation de telles machines d'usinage à l'aide d'un fluide de refroidissement (de l'outil de coupe, de la zone de coupe etc...) et notamment à l'aide d'un cryogène liquide tel l'azote liquide.

Un fluide cryogénique s'entend communément comme un fluide qui, à la pression atmosphérique, est liquide à une température très inférieure à 0°C.

On alimente traditionnellement en un tel liquide cryogénique un équipement consommateur (par exemple en azote liquide), quel que soit son type, à partir d'un réservoir de fluide cryogénique raccordé à l'équipement consommateur de ce fluide, lequel réservoir contient, sous une pression de stockage supérieure à la pression atmosphérique, un fluide cryogénique en phase liquide au fond du réservoir et en phase gazeuse au sommet du réservoir, ce réservoir étant adapté pour d'une part alimenter l'équipement consommateur en liquide qui est soutiré depuis le fond du réservoir, et d'autre part pour être approvisionné depuis l'extérieur en fluide.

On utilise le plus couramment dans l'industrie des réservoirs dits « à basse pression de stockage », c'est-à-dire dont la pression maximale atteinte au sommet du réservoir est en général inférieure à environ 4 bars absolus, mais on trouve également, selon les applications visées des stockages dits moyenne pression montant jusqu'à 15 bar voire des stockages dits haute pression montant jusqu'à 30 bars.

La pression de stockage du réservoir étant supérieure à la pression atmosphérique, l'ouverture d'une vanne placée sur la conduite de raccordement du réservoir à l'équipement consommateur (par exemple une machine d'usinage) provoque le déplacement du liquide de son point de puisage à son point d'utilisation, sans moyen d'entraînement forcé et malgré les pertes de charge sur la ligne (vannes, portions coudes etc....).

Pour s'assurer que l'entraînement du liquide cryogénique est toujours effectif quel que soit le niveau de liquide dans le réservoir, on régule classiquement la pression du gaz au sommet du réservoir de façon à ce que cette pression reste sensiblement égale à une valeur prédéterminée, fixe, par exemple de l'ordre de 2 à 4 bars (plus largement 2 à 15bar).

Cependant, la pression du liquide au fond du réservoir varie en fonction de la hauteur du liquide à l'intérieur du réservoir, de sorte que, au fur et à mesure que le niveau de liquide baisse, la pression du liquide soutiré baisse et tend à se rapprocher de la pression du gaz au sommet. Par exemple, dans le cas de l'azote, une hauteur de liquide de 10 mètres environ implique un différentiel de pression de l'ordre de 0,7bar entre la pression de gaz au sommet et la pression de liquide au fond du réservoir, au niveau du puisage.

Cette variation de pression du liquide au point de puisage conduit nécessairement à une variation du débit de liquide soutiré, entraînant des perturbations de fonctionnement pour l'équipement consommateur situé en aval. Un effet symétrique se produit lors du re-approvisionnement du réservoir en fluide.

Pour des raisons bien connues de meilleure « qualité cryogénique » en terme de frigories disponibles, la littérature et ces industries utilisatrices de cryogènes, et en particulier celle de l'usinage, se sont intéressées aux moyens d'alimenter ces postes utilisateurs en liquide franc ou sensiblement franc ou en liquide sous-refroidi, c'est-à-dire en liquide à pression abaissée, et à température plus basse que lorsqu'il était à pression plus élevée.

En effet, considérons l'exemple de l'usinage, plus la pression de pulvérisation dans la zone d'usinage est importante, meilleurs sont les coefficients d'échange thermique. Or, quand le cryogène, par exemple l'azote liquide, est pulvérisé, il se crée du gaz -dû à sa détente- en sortie de buse de pulvérisation. La quantité de gaz généré est directement proportionnelle à la température de l'azote liquide et à sa pression en amont de la buse. On comprend donc l'intérêt de s'attacher à disposer d'un liquide sous-refroidi.

Parmi la nombreuse littérature disponible, on note que certains travaux ont recommandé l'emploi de moyens de séparation de phases (dégazage) sur la ligne reliant le réservoir à l'équipement consommateur, on pourra par exemple se reporter aux documents US 4 768 356 A et EP-2 347 855.

D'autres solutions ont proposé de coupler deux réservoirs et de les utiliser alternativement après remplissage et dépressurisation. Les inconvénients de cette solution sont bien évidemment la très forte manipulation induite et la mobilisation de deux réservoirs.

Une autre solution est d'insérer un échangeur thermique (par exemple à plaques) juste en amont du point d'utilisation : dans une des voies de l'échangeur (circuit principal) circule l'azote liquide à sous refroidir (typiquement à l'origine à 3 bar et température voisine de -185 °C), tandis que dans une autre voie de l'échangeur circule un azote dépressurisé, typiquement à une pression voisine de 1 bar et à basse température, voisine de -196 °C. C'est l'échange entre ces deux voies, à co-courant ou contre-courant, qui va permettre de sous-refroidir l'azote du circuit principal. Mais le contrôle de la température est ici difficile à maitriser et à stabiliser, en particulier lorsque l'équipement consommateur en aval fonctionne en discontinu obligeant l'échangeur à passer par des phases de réchauffement, remise en froid etc...

On pourra également consulter le document WO2004/005791 au nom de la Demanderesse, qui recommande de faire varier la pression du gaz au sommet du réservoir selon l'état de fonctionnement de ce réservoir (phase de consommation de l'installation utilisatrice en aval, phase d'attente, ou phase d'alimentation du réservoir en liquide cryogénique), et qui justement préconise selon un de ses modes de réalisation, des mises à l'air du réservoir durant les périodes d'attente. En d'autres termes, lorsque le réservoir n'est pas sollicité en soutirage et ne le sera pas a priori pendant une durée significative, par exemple de plusieurs heures (par exemple la nuit), une unité de contrôle commande l'ouverture d'une vanne de mise à l'air de la partie haute du réservoir. La pression de gaz au sommet du réservoir passe alors d'une valeur de stockage à une valeur sensiblement égale à la pression atmosphérique (pression résiduelle de quelques centaines de grammes). Ainsi, en abaissant de la sorte la pression de stockage de l'azote, la variation enthalpique de ce dernier tend à augmenter, ce qui revient à disposer d'un fluide de température plus basse que lorsqu'il était sous pression. Le fluide ainsi stocké durant ces périodes de non-utilisation du réservoir présente donc une température plus basse qu'à l'ordinaire, garantissant une meilleure qualité cryogénique en terme de frigories disponibles. Et de fait, une remise en pression rapide - en utilisant par exemple son propre réchauffeur atmosphérique ou autre- permet d'utiliser le liquide déstabilisé (sous refroidi).

Néanmoins cette solution n'est pas sans inconvénients, cette mise à l'air entraîne nécessairement des pertes, et par ailleurs le paradoxe de cette procédure réside dans le besoin de re-pressuriser pour pouvoir utiliser l'azote, donc de faire entrer de la chaleur. L'expérience de cette solution a notamment démontré une vaporisation de 4 à 9% du volume stocké. Cette vaporisation n'étant pas valorisée, le coût impacte directement le site utilisateur.

On en déduit en résumé deux inconvénients majeurs de cette solution de mise à l'air :
1) L'utilisation d'azote non valorisable pour la remise en pression.
2) L'entrée d'un gaz chaud dans le stockage pour la dépressurisation et la création de pont thermique.

On a également pensé à alimenter le poste utilisateur, par exemple d'usinage, en direct à partir d'un stockage de cryogène à moyenne ou haute pression, mais on constate alors la création, en sortie de buse de pulvérisation, d'une grande quantité de gaz, gaz qui diminue les échanges thermiques.

On peut enfin penser à alimenter la machine à partir d'un stockage basse pression et au travers d'une pompe, mais on connaît les difficultés liées à la manipulation de telles pompes, auxquelles s'ajoute l'impossibilité d'alimenter plusieurs postes d'usinage d'un même site à des pressions différentes et à faible débit.

La présente invention s'attache à proposer une solution technique permettant de contrôler et maintenir des conditions opératoires à des niveaux souhaités dans une opération utilisant de tels liquides cryogéniques, par exemple une opération d'usinage, conditions liées aux caractéristiques de température, pression, et taux de diphasique du cryogène mis en oeuvre.

On développera tout particulièrement dans ce qui suit le cas de l'usinage pour des raisons de facilité mais on l'aura compris les considérations développées plus haut et dans ce qui suit concernent et s'adaptent plus largement à de nombreuses autres applications utilisatrices de liquides cryogéniques.

Pour cela comme nous le verrons plus en détails dans ce qui suit, l'invention considère que le procédé de Cryo-usinage (ou autre) ne nécessite pas forcément de connaître le taux de diphasique dans le cryogène liquide, par exemple dans l'azote liquide, mais plutôt de le contrôler et d'étudier des dérives éventuelles de celui-ci dans le temps, par exemple au cours de chaque opération d'usinage. Et c'est le mérite et la caractéristique de la présente invention que de proposer d'adopter cette nouvelle démarche.

On sait que de nombreux travaux ont tenté et tentent encore de développer un débitmètre qui permette de mesurer un débit de cryogène liquide ainsi que de mesurer le taux de diphasique dans celui-ci. A ce jour les systèmes développés n'ont pas apporté satisfaction ou comportent des faiblesses certaines (cout, encombrement, précision...), faiblesses qui sont rédhibitoires pour le domaine du cryo-usinage.

On se propose donc selon la présente invention, non pas de mesurer le taux de gaz dans le liquide cryogénique, mais de mesurer des fluctuations du taux de diphasique, ceci avec un système simple et peu onéreux.

Pour cela on mesure le débit de gaz à la sortie gaz d'un pot dégazeur (ou autre séparateur de phase) et on mesure des dérives de ce débit gaz dans le temps, mesures qui on l'aura compris, sont directement liées aux fluctuations du taux de diphasique.

On sait qu'un pot dégazeur est caractérisé par un débit maximum en fonction de la pression du gaz extrait au liquide et ne garantit pas d'être à 100% diphasique à la sortie du pot dégazeur.

A titre illustratif, dans le cas d'un exemple de mis en oeuvre de l'usinage cryogénique, les débits en azote liquide sont classiquement de l'ordre de 2l/min, le débit en gaz maximum du pot dégazeur permet donc à 10 bar de "purger" environ 250 l/min d'azote gazeux, donc assez pour purger la partie gaz dans n'importe quelle configuration.

Le pot dégazeur ne sera donc pas toujours ouvert en mode injection.

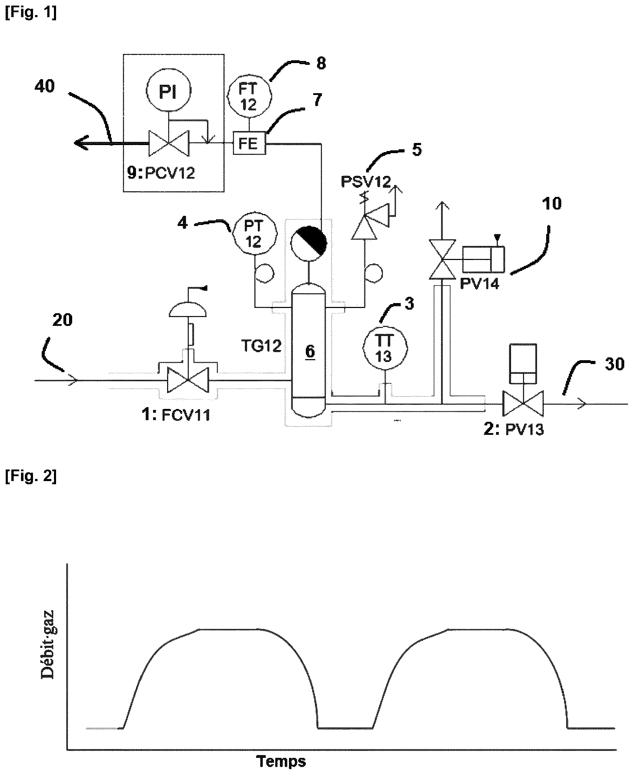

La [Fig. 1] annexée présente un exemple d'installation de mise en oeuvre de l'invention, permettant de mieux comprendre la présente proposition technique.

La nomenclature des éléments présents sur la figure est la suivante :
- 1 : « FCV11 » = vanne de réglage du débit (en pression)
- 2 : « PV13 » = vanne d'arrêt liquide permettant d'ouvrir le bypass PV14 (on dégaze donc ici et pas dans le procédé utilisateur aval), vanne dite « normalement fermée ».
- 3 : « TT13 » = transmetteur de température
- 4 : « PT12 » = transmetteur de pression
- 5 : « PSV12 » = soupape de surpression
- 6 : « TG12 » = un séparateur de phase, par exemple un pot dégazeur
- 7: « FE» = débitmètre ou capteur de débit (apte à fournir un signal qui est utilisable pour piloter d'autres éléments de l'installation)
- 8 : « FT12 » = débitmètre ou capteur de débit (apte à fournir un signal qui est utilisable pour piloter d'autres éléments de l'installation), apte à fournir une mesure du débit gaz (donc du diphasique)
- 9 : « PCV12 » = déverseur, pour assurer une contre-pression dans le pot dégazeur et pour favoriser une mesure du débit gaz plus fiable, déverseur qui représente une option avantageuse selon l'invention.
- 10 : « PV14 » = vanne d'arrêt sur bypass (conduit de dérivation), vanne dite « normalement ouverte », cette vanne est une vanne de mise en froid, il est possible (et optionnel) d'asservir cette vanne sur l'observation de l'évolution du taux de diphasique.
- 20 : le cryogène entrant
- 30 : le liquide cryogénique sortant et dirigé vers le poste utilisateur
- 40 : la sortie gaz du séparateur de phase.

La mesure du taux de diphasique grâce à cette installation, via le débit gaz ou capteur « FT12 », permet d'entreprendre par exemple l'une ou plusieurs des actions parmi les actions suivantes :
- informer le poste utilisateur des variations du taux de diphasique du fluide parvenant au poste d'usinage ;
- stopper le procédé via une action sur la vanne d'arrêt liquide PV13 si l'utilisateur le décide ;
- ajuster le débit, l'augmenter si besoin, via la vanne de réglage FCV11, pour garder un nombre de frigories constant (donc une augmentation de la pression avec ce type de vanne) ;
- refaire une phase de dégazage (et donc on remet en froid) pour supprimer le surplus de diphasique via la vanne PV14 sur le bypass.

Comme il apparaitra clairement à l'homme du métier, le signal brut du débimètre ou capteur de débit 8 n'est pas utilisable en l'état car le fonctionnement du séparateur/pot dégazeur par le biais de son flotteur rend le débit non constant et caractérisé par des à-coups.

On procède donc avantageusement à un post traitement de ce signal par un automate :
- Lors d'une mise en froid de la ligne le débit massique n'est pas constant (ligne chaude, pourcentage gaz /liquide instable, etc....).
- En mode production du poste utilisateur, par exemple du poste d'usinage en aval, le débit est soumis à des variations, du type de ce que l'on peut représenter (de façon schématique) dans la [figure 2] annexée correspondant à des changements d'outils et nombre de machines alimentées par le même réseau (débit variable).

Le post-traitement réalisé par l'automate peut alors prendre en compte par exemple l'un ou plusieurs des critères suivants:
- le nombre de périodes/cycles d'ouverture du pot dégazeur sur un cycle de production, par exemple un cycle d'usinage entre deux changements d'outils (informations de début et fin de cycle récupérées par l'automate) sur une même durée donnée.
- la durée d'ouverture du pot dégazeur à chaque ouverture de celui-ci : valeur de la durée d'ouverture, variation avec le temps de cette durée d'ouverture, constante ou en évolution.
- l'intégrale du débit de gaz mesuré durant chaque cycle d'usinage. La moyenne du taux de diphasique durant la totalité de l'utilisation de fluide cryogène peut être calculée.

Le débit de cryogène liquide, par exemple d'azote liquide, dépendra, on le comprend aisément, de la recette sélectionnée pour l'opération d'usinage (donc par exemple de la pression en aval de la vanne d'arrivée sur la zone d'usinage et des diamètres d'orifices d'injection correspondant aux diverses phases d'usinage (ébauche finition, matière, profondeur de passe, etc.), alors que comme on l'aura compris le procédé selon l'invention n'effectue pas et ne fournit pas de mesure de débit d'azote liquide.
- la comparaison des critères précédents entre 2 cycles de production et l'émission d'une alerte si des variations sont observées (dans des conditions où les conditions de pression d'azote liquide à l'entrée dans la zone d'usinage et d'orifice d'injection sont identiques pour ces 2 cycles)
- les modes pause seront écartés du calcul par récupération du signal usinage en cours depuis la machine vers l'automate ....

On peut penser que les origines d'une modification du taux de diphasique lors d'une opération d'usinage peuvent être les suivantes :
- un blocage du flotteur du pot dégazeur (l'impact de ceci est très fort)
- quand plusieurs équipements tirent sur le même stockage, l'arrêt d'un ou plusieurs de ces équipements peut avoir un impact sur un autre équipement qui lui, reste en opération
- un remplissage du stockage d'azote liquide intervenant alors qu'une opération d'usinage est en cours
- une fuite d'un organe du réseau fluide d'azote liquide.

La présente invention concerne alors un procédé d'alimentation d'un poste utilisateur en un fluide cryogénique tel l'azote liquide, pour lequel le taux de diphasique liquide/gaz parvenant au poste utilisateur est un facteur influençant la qualité de l'opération réalisée par ce poste, à partir d'un réservoir de stockage du fluide cryogénique, réservoir qui contient, sous une pression de stockage supérieure à la pression atmosphérique, le fluide cryogénique en phase liquide au fond du réservoir et en phase gazeuse au sommet du réservoir, ledit réservoir étant adapté pour alimenter ledit poste en liquide soutiré à partir du fond du réservoir, ainsi que pour être approvisionné depuis l'extérieur en fluide, se caractérisant en ce que :
i) on dispose d'un moyen de séparation de phase gaz/liquide, par exemple un pot dégazeur ou un séparateur de phase, alimenté en fluide cryogénique à partir du dit réservoir, réalisant la séparation d'une phase essentiellement liquide et d'une phase essentiellement gazeuse dudit fluide cryogénique, ladite phase essentiellement liquide étant dirigée vers le poste utilisateur ;
j) on mesure les fluctuations du taux de diphasique liquide/gaz parvenant au poste utilisateur dans le temps, par exemple au cours de chaque phase d'opération du poste utilisateur :
   - en disposant d'une mesure du débit de gaz issu de la sortie gaz du moyen de séparation de phase et en mesurant d'éventuelles dérives de ce débit gaz dans le temps ; ou
   - en disposant de l'information fournie par un capteur de débit situé sur la sortie gaz du moyen de séparation de phase, information de type binaire 0/1, permettant de détecter l'existence d'un débit en sortie de moyen de séparation, et de déterminer le temps d'ouverture du capteur sur une plage de temps donnée ;
k) on entreprend, selon le résultat des déterminations réalisées en j), une ou plusieurs actions pour informer le poste utilisateur et/ou modifier les conditions opératoires de ce poste utilisateur.

## Revendications

1. Procédé d'alimentation d'un poste utilisateur en un fluide cryogénique tel l'azote liquide, notamment d'un poste utilisateur qui est un poste réalisant des opérations d'usinage, pour lequel le taux de diphasique liquide/gaz parvenant au poste utilisateur est un facteur influençant la qualité de l'opération réalisée par ce poste, à partir d'un réservoir de stockage du fluide cryogénique, réservoir qui contient, sous une pression de stockage supérieure à la pression atmosphérique, le fluide cryogénique en phase liquide au fond du réservoir et en phase gazeuse au sommet du réservoir, ledit réservoir étant adapté pour alimenter ledit poste en liquide soutiré à partir du fond du réservoir, ainsi que pour être approvisionné depuis l'extérieur en fluide, le procédé comprenant l'étape :
i) on dispose d'un moyen de séparation de phase gaz/liquide (6), par exemple un pot dégazeur ou un séparateur de phase, alimenté (20) en fluide cryogénique à partir du dit réservoir, réalisant la séparation d'une phase essentiellement liquide et d'une phase essentiellement gazeuse (40) dudit fluide cryogénique, ladite phase essentiellement liquide (30) étant dirigée vers le poste utilisateur ; le procédé **se caractérisant en ce que**:
j) on mesure (8) les fluctuations du taux de diphasique liquide/gaz parvenant au poste utilisateur dans le temps, par exemple au cours de chaque phase d'opération du poste utilisateur :
- en disposant d'une mesure du débit de gaz issu de la sortie gaz du moyen de séparation de phase, tel que fourni par un débitmètre, et en mesurant d'éventuelles dérives de ce débit gaz dans le temps ; ou
- en disposant de l'information fournie par un capteur de débit situé sur la sortie gaz du moyen de séparation de phase, information de type binaire 0/1, permettant de détecter l'existence d'un débit en sortie du moyen de séparation, et de déterminer le temps d'ouverture du capteur sur une plage de temps donnée ;
k) on entreprend, selon le résultat des déterminations réalisées en j), une ou plusieurs actions (2, 10...) pour informer le poste utilisateur et/ou modifier les conditions opératoires de ce poste utilisateur.

2. Procédé selon la revendication 1 **se caractérisant en ce que** l'on procède à un post traitement du signal fourni par le débitmètre ou le capteur de débit, par un automate, post-traitement qui prend en compte par exemple l'un ou plusieurs des critères suivants:
• le nombre de périodes/cycles d'ouverture du moyen de séparation de phase sur un cycle de production du poste utilisateur, par exemple sur un cycle d'usinage entre deux changements d'outils, sur une même durée donnée.
• la durée d'ouverture du moyen de séparation de phase à chaque ouverture de celui-ci, pour prendre en compte notamment la valeur de la durée d'ouverture, et/ou la variation avec le temps de cette durée d'ouverture, constante ou en évolution.
• l'intégrale du débit de gaz mesuré durant chaque cycle de production du poste utilisateur.

3. Procédé selon la revendication 1 ou 2, où le poste utilisateur effectue des opérations d'usinage.

4. Procédé selon la revendication 1 ou 2, où le poste utilisateur est un mélangeur cryogénique en alimentaire, équipé de buses d'injection du fluide cryogénique par la partie basse du mélangeur.

## Patentansprüche

1. Verfahren zur Zuführung eines kryogenen Fluids wie flüssiger Stickstoff zu einer Verbraucherstation, insbesondere einer Verbraucherstation, die eine Bearbeitungsvorgänge ausführende Station ist, bei welcher der zu der Verbraucherstation gelangende Flüssigkeit/Gas-Zweiphasenanteil ein Faktor ist, der die Qualität des von dieser Station ausgeführten Vorgangs beeinflusst, ausgehend von einem Behälter zur Speicherung des kryogenen Fluids, wobei der Behälter unter einem Speicherdruck, der höher als der atmosphärische Druck ist, das kryogene Fluid in flüssiger Phase am Boden des Behälters und in gasförmiger Phase im Oberteil des Behälters enthält, wobei der Behälter geeignet ist, der Station Flüssigkeit zuzuführen, die vom Boden des Behälters aus abgezogen wird, sowie dazu, von außen mit Fluid versorgt zu werden, wobei das Verfahren den Schritt umfasst:
i) man verfügt über ein Gas/Flüssigkeit-Phasenabscheidemittel (6), zum Beispiel über ein Entgasungsgefäß oder einen Phasenabscheider, dem ausgehend von dem Behälter kryogenes Fluid zugeführt (20) wird und das die Abscheidung einer im Wesentlichen flüssigen Phase und einer im Wesentlichen gasförmigen Phase (40) des kryogenen Fluids ausführt, wobei die im Wesentlichen flüssige Phase (30) zu der Verbraucherstation geleitet wird; wobei das Verfahren **dadurch gekennzeichnet ist, dass**:
j) man die Schwankungen des zu der Verbraucherstation gelangenden Flüssigkeit/Gas-Zweiphasenanteils über die Zeit misst (8), zum Beispiel im Laufe jeder Vorgangsphase der Verbraucherstation:
- indem man über eine Messung der Gasdurchflussmenge verfügt, die aus dem Gasauslass des Phasenabscheidemittels stammt, wie sie von einem Durchflussmesser bereitgestellt wird, und indem man etwaige Abweichungen dieser Gasdurchflussmenge über die Zeit misst; oder
- indem man über die Information verfügt, die von einem Durchflusssensor bereitgestellt wird, der an dem Gasauslass des Phasenabscheidemittels angeordnet ist, eine Information vom binären 0/1-Typ, die es ermöglicht, das Vorliegen einer Durchflussmenge im Auslass des Abscheidemittels zu detektieren, und die Öffnungszeit des Sensors über einen gegebenen Zeitbereich zu bestimmen;
k) man, je nach dem Ergebnis der unter j) ausgeführten Bestimmungen, eine oder mehrere Maßnahmen (2, 10...) ergreift, um die Verbraucherstation zu informieren und/oder die Betriebsbedingungen dieser Verbraucherstation zu ändern.

2. Verfahren nach Anspruch 1, **dadurch gekennzeichnet, dass** man eine Nachbearbeitung des von dem Durchflussmesser oder dem Durchflusssensor bereitgestellten Signals durch eine Steuerung vornimmt, wobei die Nachbearbeitung zum Beispiel eines oder mehrere der folgenden Kriterien berücksichtigt:
• die Anzahl von Öffnungsperioden/-zyklen des Phasenabscheidemittels über einen Produktionszyklus der Verbraucherstation, zum Beispiel über einen Bearbeitungszyklus zwischen zwei Werkzeugwechseln, über eine selbe gegebene Dauer,
• die Öffnungsdauer des Phasenabscheidemittels bei jedem Öffnen von diesem, um insbesondere den Wert der Öffnungsdauer zu berücksichtigen, und/oder die Änderung mit der Zeit dieser Öffnungsdauer, konstant oder sich entwickelnd,
• das Integral der Gasdurchflussmenge, die während jedes Produktionszyklus der Verbraucherstation gemessen wird.

3. Verfahren nach Anspruch 1 oder 2, wobei die Verbraucherstation Bearbeitungsvorgänge durchführt.

4. Verfahren nach Anspruch 1 oder 2, wobei die Verbraucherstation ein kryogener Mischer in Lebensmittelqualität ist, der mit Düsen zum Einspritzen des kryogenen Fluids durch den unteren Teil des Mischers ausgestattet ist.

## Claims

1. Method for supplying a user station with a cryogenic fluid such as liquid nitrogen, in particular a user station which is a station carrying out machining operations, wherein the liquid/gas two-phase content arriving at the user station is a factor that influences the quality of the operation carried out by this station, from a cryogenic fluid storage tank, which tank contains, under a storage pressure higher than atmospheric pressure, the cryogenic fluid in the liquid phase at the bottom of the tank and in the gaseous phase at the top of the tank, said tank being designed to supply said station with liquid withdrawn from the bottom of the tank, and to be supplied with fluid from the outside, the method comprising the step:
i) a gas/liquid phase separation means (6), for example a degassing pot or a phase separator, is provided, which is supplied (20) with cryogenic fluid from said tank and carries out the separation of a substantially liquid phase and a substantially gaseous phase (40) of said cryogenic fluid, said substantially liquid phase (30) being directed toward the user station; the method being **characterized in that**:
j) the fluctuations in the liquid/gas two-phase content arriving at the user station are measured (8) over time, for example during each operating phase of the user station:
- by having a measurement of the flow rate of gas output from the gas outlet of the phase separation means, as provided by a flow meter, and by measuring any deviations in this flow rate of gas over time; or
- by having information supplied by a flow sensor situated at the gas outlet of the phase separation means, this information being of the 0/1 binary type, making it possible to detect the existence of a flow at the outlet of the separation means and to determine the opening time of the sensor over a given time interval;
k) depending on the result of the determinations made in j), one or more actions (2, 10 etc.) are undertaken in order to inform the user station and/or to modify the operating conditions of this user station.

2. Method according to Claim 1, **characterized in that** the signal supplied by the flow meter or the flow sensor is post-processed by a controller, this post-processing taking into account for example one or more of the following criteria:
• the number of opening periods/cycles of the phase separation means over a production cycle of the user station, for example over a machining cycle between two tool changes, for one and the same given duration,
• the opening duration of the phase separation means each time the latter is opened, in order to take into account in particular the value of the opening duration, and/or the variation over time of this opening duration, which is constant or changes,
• the integral of the gas flow rate measured during each production cycle of the user station.

3. Method according to Claim 1 or 2, wherein the user station carries out machining operations.

4. Method according to Claim 1 or 2, wherein the user station is a food-grade cryogenic mixer equipped with nozzles for injecting the cryogenic fluid through the bottom part of the mixer.
